# EUROPÄISCHE PATENTSCHRIFT

(11) **EP 1 485 039 B1**
(45) Veröffentlichungstag und Bekanntmachung des Hinweises auf die Patenterteilung: **27.02.2013**
(21) Anmeldenummer: 02807052.2
(22) Anmeldetag: 16.11.2002
(51) Int. Cl.: A61C 17/34, A61C 17/32, A46B 9/04

(54) **elektrische Zahnbürste**
electric toothbrush
brosse à dents électrique

(30) Priorität: 15.03.2002 DE 10211391
(43) Veröffentlichungstag der Anmeldung: 15.12.2004
(73) Patentinhaber: Braun GmbH, 61476 Kronberg (DE)
(72) Erfinder: KRESSNER, Gehard, D-63674 Altenstadt (DE)
(86) Internationale Anmeldenummer: PCT/EP2002/012876
(87) Internationale Veröffentlichungsnummer: WO 2003/077790

(56) Entgegenhaltungen:
- EP-A- 1 093 770
- US-A- 5 504 959
- US-A- 5 524 312

## Beschreibung

Die vorliegende Erfindung betrifft eine elektrischen Zahnbürste, die ein Handteil mit einem Antrieb aufweist, mit einem Zahnbürstenkopf mit einem Bürstenkopfträger, der mit dem Handteil verbindbar ist, sowie mehreren Borstenträgern, die jeweils ein Borstenfeld tragen, beweglich an dem Bürstenkopfträger gelagert sind und von dem Antrieb oszillierend antreibbar sind, wobei die Borstenträger jeweils mittels einer Antriebskupplung an einen Übertrager des Antriebs ankuppelbar sind.

Aus der US 5,524,312 ist eine elektrische Zahnbürste bekannt, an deren Bürstenkopf zwei separate Borstenträger vorgesehen sind, die von einer gemeinsamen Antriebswelle angetrieben werden. Der eine Borstenträger führt eine oszillierende Drehbewegung um eine zum Bürstenstiel senkrechte Achse aus. Der andere Borstenträger wird um eine zum Bürstenstiel parallele Achse hin- und hergeschwenkt. Diese Borstenträgeranordnung bewirkt zwar eine aktive Relativbewegung zwischen den Borstenbüscheln, ist jedoch insoweit nachteilig, als sie auf einen speziellen Antriebsmechanismus, nämlich eine in axialer Richtung hin- und herbewegte Übertragungsstange, beschränkt ist. Der weiter hinten zum Handteil hin angeordnete Zusatzborstenträger benötigt eine zylinderische Unterseite mit einer speziellen, gekrümmten Kurvennut, in der ein Eingriffsvorsprung der in Längsrichtung oszillierenden Antriebsachse eingreift. Zum anderen ist die Konfiguration der auf den beiden Borstenträgern angeordneten Borstenbüschel wenig geeignet, um Zahnzwischenräume effektiv zu reinigen.

Der vorliegenden Erfindung liegt daher die Aufgabe zugrunde, einen verbesserte Zahnbürste zu schaffen, die die Nachteile des Standes der Technik vermeidet und letzteren in vorteilhafter Weise weiterbildet. Vorzugsweise soll mit einem einfachen, effektiven Antrieb der beiden Borstenträger eine verbesserte Reinigung der Zähne erreicht werden.

Diese Aufgabe wird erfindungsgemäß durch einen elektrische Zahnbürste gemäß Patentanspruch 1 gelöst. Bevorzugte Ausgestaltungen der Erfindung sind Gegenstand der abhängigen Ansprüche.

Erfindungsgemäß besitzen die Borstenträger also jeweils Antriebskupplungsmittel, mit denen sie an eine gemeinsame, quer zur Zahnbürstenlängsrichtung wippbare Antriebswippe des Antriebs angekuppelt sind. Durch die Anordnung zweier separat gelagerter Borstenträger, die von einer gemeinsamen Antriebswippe um verschiedene Bewegungsachsen angetrieben werden, kann in einfacher Weise eine bessere Putzwirkung erzielt werden. Die Relativbewegung der auf den Borstenträgern gelagerten Borstenfeldern unterstützt die Putzbewegung, so dass die Reinigungswirkung nicht nur durch die Bewegung des Putzers erfolgt.

Die Antriebswippe zum Antreiben der Borstenträger kann verschieden ausgebildet sein. Nach einer Ausführung der Erfindung können die Borstenträger an eine mehrachsig wippbare, eine doppelkegelförmige Umlaufbahn beschreibende Antriebswippe, die dem Handteil der Zahnbürste zugeordnet ist, angekuppelt werden. Alternativ kann auch eine nur einachsig wippbare Antriebswippe vorgesehen sein, deren Wippachse sich im wesentlichen senkrecht zur Längsrichtung der Zahnbürste erstreckt, vorzugsweise derart, daß die Antriebswippe in einer Ebene gewippt werden kann, die die Längsachse der Zahnbürste enthält und zu der von den Borstenbüscheln definierten Borstenhauptrichtung senkrecht ausgerichtet ist, d.h. im wesentlichen parallel zu den von den Borstenträgern definierten Ebenen liegt. Alternativ kann die Antriebswippe auch in einer die Borstenhauptrichtung und die Zahnbürstenlängsachse enthaltenden Ebene wippen, insbesondere dann, wenn die Borstenfelder mit einer Stocherbewegung angetrieben werden sollen. Vorzugsweise ist jedoch die zuvor beschriebene mehrachsig wippbare Antriebswippe vorgesehen, die eine doppelkegelförmige Antriebsbewegung beschreibt.

Die Borstenträger sind jeweils um eine bzw. entlang einer Bewegungsachse quer zur Zahnbürstenlängsrichtung an dem Bürstenkopfträger beweglich gelagert, wobei jeder Borstenträger seine eigene Bewegungsachse besitzt, die voneinander beabstandet sind. Der Zahnbürstenkopf zeichnet sich also dadurch aus, dass zwei um separate Querachsen beweglich gelagerte Borstenträger von einem gemeinsamen Antriebsübertragerelement, welches beliebige Antriebsbewegungen ausführen kann, angetrieben werden. Unabhängig von der konkreten Ausbildung des Antriebsübertragerelements besitzt eine solche Zahnbürstenkopfkonfiguration besondere Vorteile hinsichtlich einer effektiven Zahnreinigung.

Ein Hauptborstenträger, der an dem von dem Handteil der Zahnbürste entfernten Ende des Bürstenkopfträgers angeordnet ist, ist um eine Drehachse, die im wesentlichen senkrecht zur Zahnbürstenlängsrichtung sowie im wesentlichen parallel zur Hauptrichtung der auf dem Hauptborstenträger vorgesehenen Borsten angeordnet ist, drehbar gelagert und von der Antriebswippe oszillierend antreibbar. Der Hauptborstenträger kann im wesentlichen plattenförmig ausgebildet sein und eine kreisförmige Kontur besitzen. Vorzugsweise ist er um seine Symmetrieachse rotatorisch oszillierend antreibbar. Der rotatorisch oszillierenden Antriebsbewegung kann gegebenenfalls eine Stocherbewegung entlang der Drehachse des Hauptborstenträgers überlagert sein, um eine gründlichere Reinigung der Zahnzwischenräume zu erreichen. Hierzu kann der Hauptborstenträger in Richtung seiner Drehachse verschieblich am Bürstenkopfträger gelagert sein.

Neben dem Hauptborstenträger ist ein Zusatzborstenträger vorgesehen, der in unmittelbarer Nachbarschaft hinter dem Hauptborstenträger, also näher zu dem Handteil der Zahnbürste hin, angeordnet ist. Der Zusatzborstenträger kann verschiedene Bewegungsachsen besitzen. In einer Umsetzung der Erfindung ist der Zusatzborstenträger um eine im wesentlichen senkrecht zur Zahnbürstenlängsrichtung angeordnete Schwenkachse schwenkbar gelagert und von der Antriebswippe, die auch den Hauptborstenträger antreibt, oszillierend antreibbar.

Die Schwenkachse kann bezogen auf den Zusatzborstenträger bzw. das darauf angeordnete Borstenfeld außermittig angeordnet sein, um an einem der Schwenkachse gegenüberliegenden Abschnitt des Borstenträgers eine größere Bewegung zu erreichen. Die Schwenkachse des Zusatzborstenträgers ist in einer Umsetzung der Erfindung parallel zur Hauptrichtung der Borsten und damit parallel zur Drehachse des Hauptborstenträgers angeordnet sein. Wird die Achse in Längsrichtung der Zahnbürste an einem Randabschnitt des Zusatzborstenträgers angeordnet, vollführt der gegenüberliegendende Randabschnitt des Zusatzborstenträgers eine quer hin- und hergehende Bewegung. Grundsätzlich wäre es auch möglich, die Schwenkachse bezüglich des Zusatzborstenträgers mittig anzuordnen, so dass sich dieser ähnlich dem Hauptborstenträger in sich verdreht. Bevorzugt ist jedoch die zuvor beschriebene Anordnung der Schwenkachse insbesondere an dem dem Handteil zugewandten Ende des Zusatzborstenträgers, so dass sich die an den Hauptborstenträger angrenzenden Borsten, die auf dem Zusatzborstenträger befestigt sind, seitlich quer hin- und herbewegen und die Zahnzwischenräume auswischen können.

In einer Umsetzung der Erfindung liegt die Schwenkachse des Borstenträgers im wesentlichen in der von dem Zusatzborstenträger definierten Ebene und erstreckt sich senkrecht zur Längsrichtung der Zahnbürste. Der Zusatzborstenträger führt dementsprechend eine auf - und niedergehende Wippbewegung aus, so dass seine Borstenbüschel stochernd auf- und abgehen. Diese Wippachse des Zusatzborstenträgers kann sich bezogen auf die Längserstreckung des Zusatzborstenträgers in Längsrichtung der Zahnbürste etwa mittig erstrecken, so dass das hintere Ende und das vordere Ende des Zusatzborstenträgers gegenläufig auf- und abwippen. In alternativer Ausführung der Erfindung kann die Wippachse des Zusatzborstenträgers auch zu einem Ende des Zusatzborstenträgers hin verschoben sein. Insbesondere kann der Zusatzborstenträger um sein dem Handteil zugewandtes Ende wippbar an dem Bürstenkopfträger gelagert sein, so dass die an den Hauptborstenträger angrenzenden Borstenbüschel, die auf dem Zusatzborstenträger befestigt sind, eine auf- und abgehende Stocherbewegung ausführen. Hierdurch können die Zahnzwischenräume, die an von dem Borstenfeld des Hauptborstenträgers bearbeitete Zahnflanken angrenzen, besonders wirkungsvoll gereinigt werden.

In einer Umsetzung der Erfindung ist der Zusatzborstenträger entlang einer Bewegungsachse an dem Bürstenkopfträger translatorisch verschieblich gelagert ist, wobei die entsprechende Schiebeführung des Zusatzborstenträgers einen Freiheitsgrad quer zur Längsrichtung der Zahnbürste besitzt.

Um mit den auf dem Zusatzborstenträger angeordneten Borsten eine Stocherbewegung in Längsrichtung der Borsten ausführen zu können, liegt die die translatorische Bewegungsachse des Zusatzborstenträgers gemäß eioner Umsetzung der Erfindung im wesentlichen senkrecht zu der von dem Zusatzborstenträger definierten Ebene, d.h. im wesentlichen parallel zu der von den Borsten definierten Hauptborstenrichtung. In einer anderen Umsetzung der Erfindung liegt die Bewegungsachse quer zur Zahnbürstenlängsrichtung in der von dem Zusatzborstenträger definierten Ebene, so dass der Zusatzborstenträger quer hin- und herbewegt werden kann. Hierdurch können die auf dem Zusatzborstenträger angeordneten Borsten in Richtung der Zahnzwischenräume bewegt werden und diese entsprechend auswischen.

Die Antriebskupplungen zwischen den beiden Borstenträgern und der Antriebswippe sind vorzugsweise als Gelenkverbindung ausgebildet, die jeweils eine Gelenkachse quer zur Zahnbürstenlängsrichtung besitzen. Insofern als die Antriebswippe an ihren Ankupplungspunkten zu den Borstenträgern nicht translatorisch hin- und hergeht, sondern eine Schwenkbewegung ausführt, kann durch die gelenkige Verbindung zwischen den Borstenträgern und der Antriebswippe der entsprechende Winkelversatz ausgeglichen werden.

In einer Weiterbildung besitzen die gelenkigen Verbindungen zwischen dem Antriebsübertragerelement und den Borstenträgern neben ihrer Gelenkigkeit zumindest einen weiteren Freiheitsgrad. Insbesondere sind die Antriebskupplungen der Borstenträger derart ausgebildet, dass ausschließlich Kräfte und Bewegungen quer zur Zahnbürstenlängsrichtung übertragen werden. In Längsrichtung der Zahnbürste werden keine Kräfte übertragen. Zum einen ermöglicht dies einen Ausgleich der zwischen der Antriebswippe und den Borstenträgern entstehenden Relativbewegungen in Längsrichtung der Zahnbürste. Zum anderen ermöglicht es dies, den Zahnbürstenkopf in einfacher Weise auszutauschen. Vorzugsweise besitzt der Bürstenkopfträger nämlich lösbare Befestigungsmittel zu seiner Befestigung am Handteil der Zahnbürste, so dass der Bürstenkopfträger zusammen mit den Borstenträgern vom Handteil abnehmbar bzw. darauf setzbar ist. Die Antriebskupplungen besitzen vorzugsweise Ausnehmungen bzw. Eingriffsflächen, die beim Aufstecken des Zahnbürstenkopfs in axialer Richtung auf das handteilseitige Antriebsübertragerelement bzw. die Antriebswippe auffädeln. Die Antriebskupplungen sind vorzugsweise unmittelbar an den Borstenträgern vorgesehen, d.h. der Zahnbürstenkopf kann frei von eigenen Antriebswellen, -wippen oder - stäben ausgebildet sein, wobei die handteilseitig vorgesehene Antriebswippe unmittelbar in eine Ausnehmung in dem Zusatzborstenträger und in dem Hauptborstenträger eingefädelt bzw. mit Eingriffsflächen des Zusatzborstenträgers und des Hauptborstenträgers in Eingriff gebracht wird, wenn der Zahnbürstenkopf auf das Handteil der Zahnbürste aufgesteckt wird.

Um eine Ankupplung an eine mehrachsig wippbare Antriebswippe, die eine doppelkegelförmige Antriebsbewegung ausführt, zu ermöglichen, und dabei die Antriebsbewegung nur teilweise auf die Borstenträger weiterzugeben, kann die gelenkige Verbindung zwischen der Antriebswippe und den Borstenträgern einen Freiheitsgrad quer zur Zahnbürstenlängsrichtung aufweisen. Insbesondere kann die Verbindung zwischen der Antriebswippe und dem Zusatzborstenträger und/oder dem Hauptborstenträger in einer Richtung quer zu der Bewegungsebene, in der sich der jeweilige Borstenträger bewegen soll, freigängig ausgebildet sein. Die sich doppelkegelförmig bewegenden Antriebswippe überträgt dementsprechend nur eine Komponente ihrer kreisförmig umlaufenden Bewegung auf den jeweiligen Borstenträger. In einer Umsetzung der Erfindung, in der der Zusatzborstenträger um eine Achse senkrecht zum Zusatzborstenträger, d.h. parallel zu den Borsten verschwenkt wird, sitzt die Antriebswippe in einem Längsschlitz parallel zur Borstenrichtung in dem Zusatzborstenträger. Die Bewegungskomponente quer zur Borstenlängsrichtung wird auf den Borstenträger übertragen, während die Bewegungskomponente der Antriebswippe parallel zu Borstenlängsrichtung nicht übertragen wird. Soll hingegen der Zusatzborstenträger auf- und abgewippt werden, so kann die Antriebswippe alternativ in einem Querschlitz parallel zur Borstenträgerebene sitzen, so dass der entsprechende Abschnitt auf- und abbewegt wird, die quer hin- und hergehende Bewegung jedoch nicht übertragen wird.

In einer Umsetzung der Erfindung hat der Zusatzborstenträger als Antriebskupplung eine Gleitfläche, die sich quer zur Längsrichtung der Zahnbürste erstreckt und auf der die Antriebswippe abgleitet. Vorzugsweise kann dabei eine Vorspanneinrichtung beispielsweise in Form einer Feder vorgesehen sein, die den Zusatzborstenträger mit seiner Gleitfläche auf die Antriebswippe drückt und mit dieser in Eingriff hält. Gegebenenfalls kann auf eine solche Vorspannung auch verzichtet werden, da zum Beispiel dann, wenn der Zusatzborstenträger mit einer Stocherbewegung auf- und abgewippt werden soll, der Zusatzborstenträger von den Zahnputz-Reaktionskräften automatisch auf die Antriebswippe gedrückt wird.

Sofern eine doppelkegelförmig umlaufende Antriebswippe vorgesehen ist, kann die Eingriffs-Gleitfläche des Zusatzborstenträgers im wesentlichen eben ausgebildet sein. Die Antriebsbewegung der Antriebswippe besitzt in diesem Fall zwei zueinander senkrechte Komponenten, so dass die Antriebswippe einerseits auf der Gleitfläche hin- und herrutscht und dabei gleichzeitig senkrecht gegen die Gleitfläche drückt und den Borstenträger entsprechend bewegt.

Ist hingegen eine einachsig wippende Antriebswippe vorgesehen, kann die Gleitfläche eine nockenförmige Wölbung quer zur Bewegungsrichtung der Antriebswippe besitzen. Fährt die Antriebswippe über die Gleitfläche hin und her, erzeugt die nockenförmige Wölbung dabei die gewünschte Bewegung senkrecht zu dem Hin- und Herfahren. Falls die einachsig gelagerte Antriebswippe in der Ebene wippt, in der auch der Borstenträger bewegt werden soll, kann die Eingriffsfläche ein einfaches Auflager sein.

Um die angetriebene Bewegung der beiden Borstenträger bzw. der darauf angeordneten Borstenfelder besser nutzen und die Zahnreinigung noch effektiver zu machen, können an dem Hauptborstenträger und/oder an dem Zusatzborstenträger mehrere Gruppen von Borstenbüscheln befestigt sein, die in verschiedene Richtungen geneigt angeordnet sind. Dabei können die in verschiedene Richtungen geneigten Gruppen von Borstenbüschel verschiedene Querschnitte besitzen und/oder mit unterschiedlichen Eigenschaften wie unterschiedlicher Steifigkeit, Borstenlänge, Borstenhöhe und dgl. ausgebildet sein. Vorzugsweise sind die auf dem Hauptborstenträger angeordneten Borstenbüschel in andere Richtungen geneigt als die Borstenbüschel auf dem Zusatzborstenträger. Nach einer Ausführung der Erfindung können auf jedem Borstenträger unterschiedlich geneigte Borstenbüschel vorgesehen sein.

Es hat sich dabei als zweckmäßig erwiesen, nicht nur Borstenbüschel mit kreisrundem Querschnitt, sondern auch Borstenbüschel mit einem von der Kreisform abweichenden Querschnitt, insbesondere mit länglichem, ovalem bzw. rechteckigem Querschnitt vorzusehen.

Um besser in Zahnzwischenräume eindringen zu können, können an dem Hauptborstenträger und/oder an dem Zusatzborstenträger Borstenbüschel vorgesehen sein, deren freie Arbeitsenden in verschiedenen Höhen über den Borstenträgern liegen.

Weitere Vorteile, Anwendungsmöglichkeiten und vorteilhafte Merkmale der Erfindung ergeben sich aus der nachfolgenden Beschreibung von Ausführungsbeispielen der Erfindung, die in den Figuren der Zeichnung dargestellt sind. Dabei bilden alle beschriebenen oder bildlich dargestellten Merkmale für sich oder in beliebiger sinnvoller Kombination den Gegenstand der Erfindung, auch unabhängig von ihrer Zusammenfassung in den Patentansprüchen oder deren Rückbeziehung sowie unabhängig von ihrer Formulierung bzw. Darstellung in der Beschreibung bzw. in der Zeichnung. In der Zeichnung zeigen:
- Figur 1: einen Längsschnitt durch eine elektrische Zahnbürste mit einem wechselbaren Zahnbürstenkopf gemäß einer ersten bevorzugten Ausführung der Erfindung,
- Figur 2: eine ausschnittsweise, perspektivische Draufsicht auf den Zahnbürstenkopf aus Figur 1, die zwei beweglich gelagerte Borstenträger zeigt, die beide jeweils um eine zur Borstenhauptrichtung parallele Schwenkachse schwenkbar gelagert und antreibbar sind,
- Figur 3: eine ausschnittsweise, perspektivische Ansicht des Zahnbürstenkopfs aus Figur 2, die den Antriebsmechanismus und insbesondere die Ankupplung des hinteren Zusatzborstenträgers an eine Antriebswippe zeigt,
- Figur 4: eine ausschnittsweise, perspektivische Ansicht eines Zahnbürstenkopfs mit zwei beweglich gelagerten Borstenträgern gemäß einer weiteren Ausführung der Erfindung, wonach der hintere Zusatzborstenträger um eine Querachse an seinem hinteren Endabschnitt auf- und abwippbar gelagert und antreibbar ist,
- Figur 5: eine ausschnittsweise, perspektivische Ansicht des Zahnbürstenkopfs aus Figur 4 in einer anderen Blickrichtung, die den Antriebsmechanismus für die beiden Borstenträger und insbesondere die Ankupplung des hinteren Zusatzborstenträgers an eine Antriebswippe zeigt,
- Figur 6: eine ausschnittsweise, perspektivische Ansicht eines Zahnbürstenkopfs mit zwei beweglich gelagerten Borstenträgern nach einer alternativen Ausführung der Erfindung, wonach der hintere Zusatzborstenträger um eine Querachse wippbar etwa mittig gelagert ist,
- Figur 7: eine ausschnittsweise, perspektivische Ansicht des Zahnbürstenkopfs aus Figur 6 in einer anderen Blickrichtung, die den Antriebsmechanismus für die beiden Borstenträger und insbesondere die Ankupplung des hinteren Zusatzborstenträgers an die Antriebswippe des Antriebs zeigt,
- Figur 8: eine ausschnittsweise, perspektivische Ansicht eines Zahnbürstenkopfs mit zwei beweglich gelagerten Borstenträgern nach einer alternativen Ausführung der Erfindung, wonach der hintere Zusatzborstenträger um eine translatorische Bewegungsachse im wesentlichen parallel zur Borstenhauptrichtung auf - und abfahrbar gelagert ist,
- Figur 9: eine ausschnittsweise, perspektivische Ansicht des Zahnbürstenkopfs aus Figur 8 in einer anderen Blickrichtung, die den Antriebsmechanismus für die beiden Borstenträger und insbesondere die Ankupplung des hinteren Zusatzborstenträgers an die Antriebswippe des Antriebs zeigt,
- Figur 10: eine ausschnittsweise, perspektivische Ansicht eines Zahnbürstenkopfs mit zwei beweglich gelagerten Borstenträgern nach einer weiteren Ausführung der Erfindung, wonach der hintere Zusatzborstenträger um eine translatorische Bewegungsachse quer zur Zahnbürstenlängsrichtung und quer zur Borstenhauptrichtung hin- und herfahrbar gelagert ist,
- Figur 11: eine ausschnittsweise, perspektivische Ansicht des Zahnbürstenkopfs aus Figur 10, die den Antriebsmechanismus für die beiden Borstenträger und insbesondere die Ankupplung des hinteren Zusatzborstenträgers an die Antriebswippe zeigt,
- Figur 12: eine perspektivische Ansicht eines Zahnbürstenkopfs der Zahnbürste aus Figur 1, die die Anordnung der Borstenbüschel auf den beiden Borstenträgern zeigt,
- Figur 13: einen Querschnitt durch die Drehachse des Hauptborstenträgers aus Figur 12 entlang der Linie B-B in Figur 14, und
- Figur 14: einen Längsschnitt durch den Zahnbürstenkopf aus Figur 12.

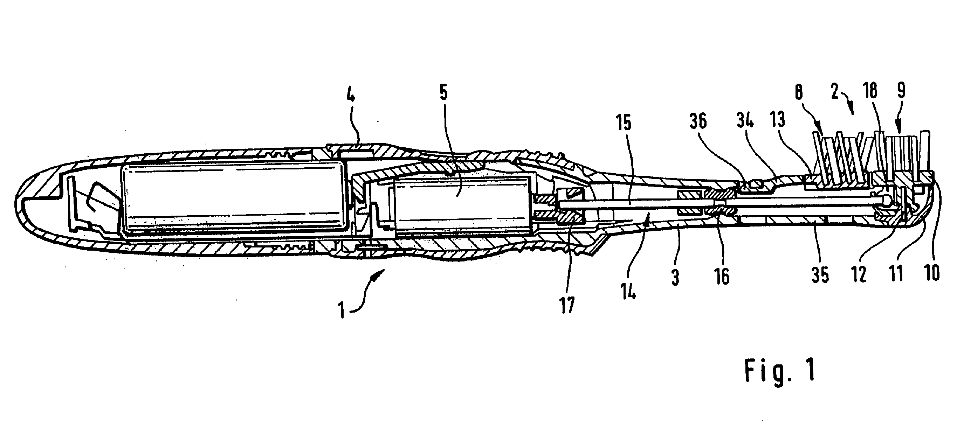

Die in Figur 1 gezeigte Zahnbürste umfasst einen Handteil 1 sowie einen Zahnbürstenkopf 2, der auf einem Bürstenrohr 3 sitzt, das ein stirnseitiges Ende des Handteils 1 bildet bzw. damit verbunden ist. Der Handteil 1 wird von einem Zahnbürstengehäuse 4 gebildet, in dem axial hintereinander ein Batterieaufnahmefach und ein Antriebsmotor 5 angeordnet sind.

Der Bürstenkopf 2 besitzt zwei Borstenfelder, nämlich ein unmittelbar am Kopfende liegendes Hauptborstenfeld 9 sowie ein hinteres Zusatzborstenfeld 8, das in unmittelbarer Nachbarschaft des Hauptborsenfeldes 9 auf dessen dem Handteil 1 zugewandten Seite liegt.

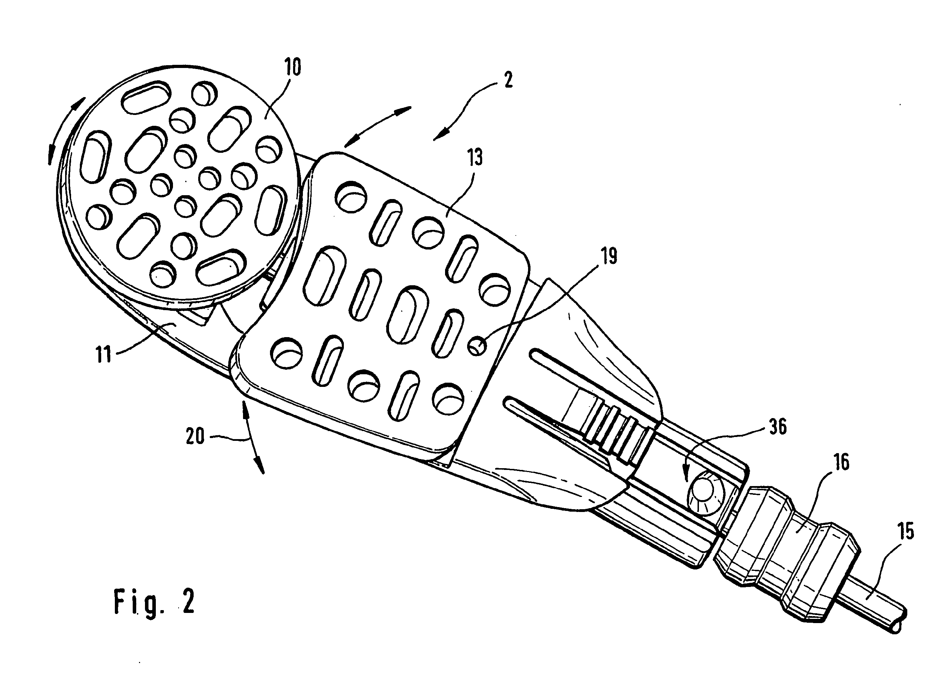

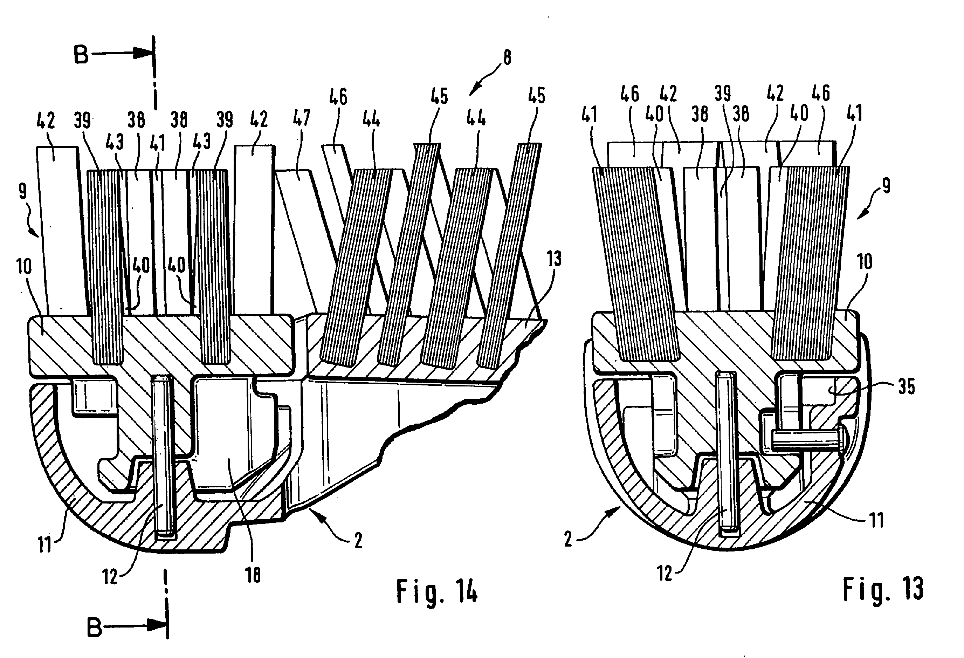

Wie Figur 2 zeigt, wird das am Kopfende liegende Borstenfeld von einem Hauptborstenträger getragen, der zum Borstenfeld hin etwa kreisplattenförmig ausgebildet ist und an einem Bürstenkopfträger 11 befestigt ist. Wie Figur 13 zeigt, sitzt der Borstenträger 10 drehbar auf einer im Bürstenkopfträger 11 verankerten Drehachse 12, die sich senkrecht zur Zahnbürstenlängsachse etwa parallel zu der Hauptborstenrichtung des Borstenfeldes 9 erstreckt. Die Drehachse 12 bildet die Symmetrieachse des plattenförmigen Borstenträgers 10.

Der Borstenträger 10 wird vom Motor 5 her mittels eines Übertrages 14 in Form einer Antriebsschwinge 15 rotatorisch oszillierend um die Drehachse 12 angetrieben. Die Antriebsschwinge 15 ist ein gerader, im wesentlichen starrer Metallstab und wird zwischen dem Motor und dem Borstenträger 10 im Handteil 1 bzw. im Bürstenrohr 3 in einem Lager 16 gelagert, das als elastischer Lagerstopfen in Form eines Rings bzw. einer Hülse ausgebildet sein kann. Das Lager 16 erlaubt ein mehrachsiges Verschwenken der Antriebsschwinge 15 um Achsen, die in einer zur Längsrichtung der Zahnbürste senkrechten Ebene liegen. Angetrieben wird die Antriebsschwinge 15 von einem Exzenter 17, der drehfest auf der Motorwelle sitzt, die sich in Längsrichtung der Zahnbürste erstreckt (vgl. Figur 1). Die Antriebsschwinge 15 führt dabei eine doppelkegelförmige Taumel- bzw. Umlaufbewegung aus, wobei die Spitzen der beiden Kegel etwa im Bereich des Lagers 16 liegen. Die beiden Enden der Antriebsschwinge 15 führen eine Kreisbahnbewegung jeweils in einer zur Längsrichtung der Zahnbürste senkrechten Ebene aus.

Das dem Borstenträger 10 zugewandte Ende der Antriebsschwinge 15 sitzt in einer längsschlitzförmigen Ausnehmung 18 in dem Borstenträger 10, die in einer dem Handteil 1 zugewandten Umfangsfläche des Borstenträgers 10 ausgebildet ist und sich im wesentlichen parallel zur Drehachse 12 erstreckt (vgl. Figuren 1 und 14). Durch die längsschlitzförmige Ausnehmung wird nur die Komponente der Antriebsbewegung der Antriebswippe 15 quer zur Drehachse 12 auf den Borstenträger 10 übertragen. Die Auf- und Abbewegung, d.h. die Komponente der umlaufenden Antriebsbewegung parallel zur Drehachse 12 wird nicht übertragen, da die Antriebswippe 15 in der Ausnehmung 18 parallel zur Drehachse 12 freigängig ist.

Wie Figur 2 zeigt, wird das hintere, näher beim Handteil 1 liegende Borstenfeld 8 von einem etwa plattenförmigen Zusatzborstenträger 13 getragen, der wie der Hauptborstenträger 10 unabhängig vom Antriebsübertrager 15 beweglich an dem Bürstenkopfträger 11 gelagert ist. Wie Figur 2 zeigt, ist der Zusatzborstenträger 10 an seinem hinteren, dem Handteil zugewandten Randabschnitt um eine Schwenkachse 19 schwenkbar gelagert, die sich im wesentlichen senkrecht zur Längsrichtung der Zahnbürste bzw. im wesentlichen parallel zur Drehachse 12 des Borstenträgers 10 und senkrecht zu der von dem Zusatzborstenträger 13 definierten Ebene erstreckt. Dementsprechend kann der Zusatzborstenträger 13, insbesondere sein dem Hauptborstenträger 10 zugewandter Abschnitt, seitlich quer hin- und herschwenken, wie dies der Pfeil 20 verdeutlicht.

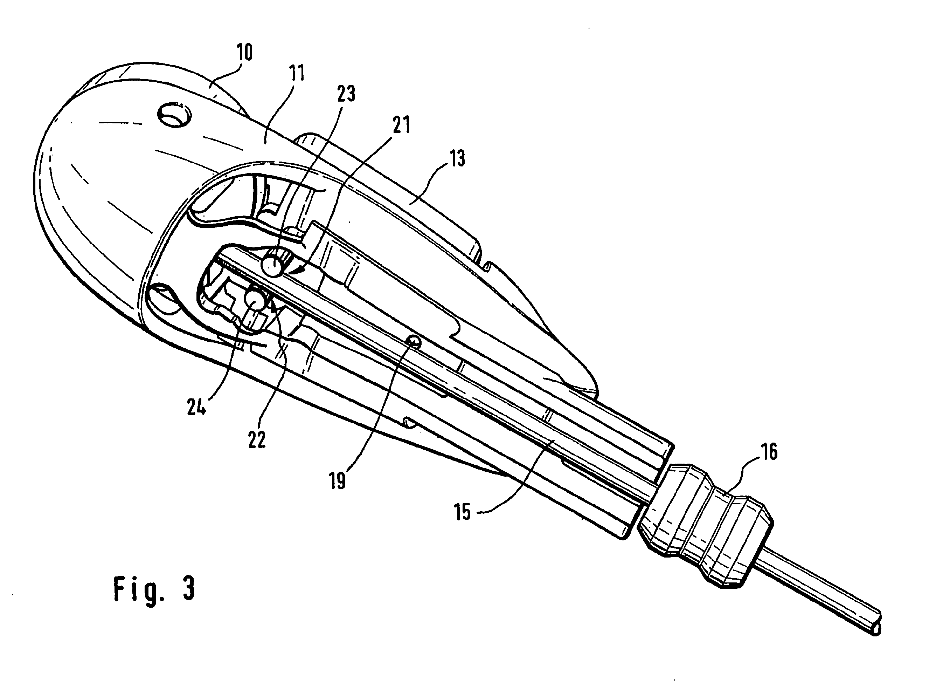

Um das Zusatzborstenfeld 8 um die Schwenkachse 19 herum rotatorisch oszillierend anzutreiben, ist der Zusatzborstenträger 13 mit der Antriebswippe 15 gekoppelt, die auch den Hauptborstenträger 10 antreibt. Wie Figur 3 zeigt, ist auf der Unterseite des Zusatzborstenträgers 13 eine Antriebskupplung 21 vorgesehen, die aus einer zur Schwenkachse 19 parallelen Längsausnehmung 22 besteht, in der die Antriebswippe 15 geführt ist. Die Längsausnehmung 22 wird in der gezeichneten Ausführung von zwei pfostenförmigen Vorsprüngen 23 und 24 definiert, zwischen denen die Antriebswippe 15 geführt ist. Die Vorsprünge 23, 24 erstrecken sich im wesentlichen parallel zur Schwenkachse 19, so dass die zwischen den Vorsprüngen 23 und 24 definierte Ausnehmung bzw. der Spalt ebenfalls parallel zur Schwenkachse 19 verläuft. Dementsprechend wird auch hier nur eine Komponente der umlaufenden Antriebsbewegung der Antriebswippe 15 übertragen, nämlich in der zur Zahnbürstenlängsrichtung parallelen Ebene senkrecht zur Schwenkachse 19. Die vertikale Komponente der Antriebsbewegung parallel zur Symmetrieebene der Zahnbürste wird nicht übertragen, da die Antriebswippe in dieser Richtung in der Längsausnehmung 22 zwischen den Vorsprüngen 23 und 24 frei hin- und hergehen kann.

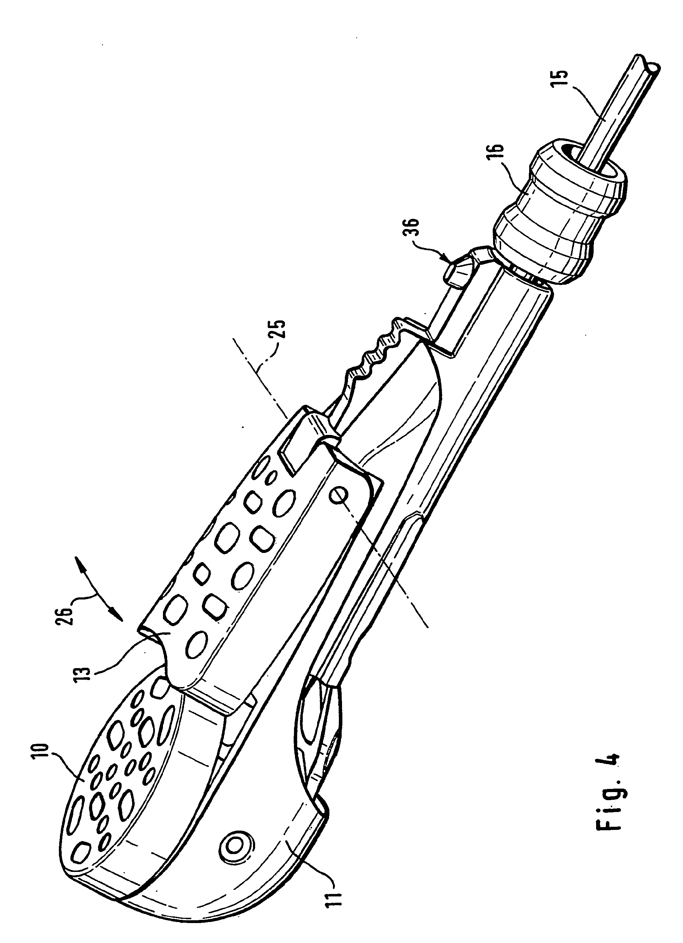

Alternative Lagerungen des Zusatzborstenfeldes 8 bzw. des Zusatzborstenträgers 13 zeigen die Figuren 4 bis 11. Die darin gezeigten Zahnbürstenköpfe sind ebenfalls für die in Figur 1 gezeigte Zahnbürste vorgesehen und entsprechen im übrigen dem zuvor beschriebenen Zahnbürstenkopf, so dass insoweit auf dessen Beschreibung Bezug genommen wird und dieselben Bezugsziffern für entsprechende Bauteile verwendet sind.

Gemäß Figur 4 ist der Zusatzborstenträger 13 an dem Bürstenkopfträger 11 um eine Schwenkachse 25 schwenkbar gelagert, die sich im wesentlichen parallel zu der von dem Zusatzborstenträger 13 definierten Ebene bzw. quer zur Drehachse 12 des Borstenträgers 10 erstreckt und quer zur Zahnbürstenlängsrichtung verläuft. Der Zusatzborstenträger 13 ist dabei mit seinem hinteren, d.h. dem Handteil 1 zugewandten Endabschnitt bzw. Rand schwenkbar gelagert, so dass er um die Schwenkachse 25 herum eine auf- und abgehende Wippbewegung ausführen kann. Der dem Hauptborstenträger 10 zugewandte Abschnitt des Zusatzborstenträgers 13 kann gemäß dem Pfeil 26 auf- und abwippen, so dass die Borsten des Zusatzborstenfeldes 8 eine Stocherbewegung ausführen.

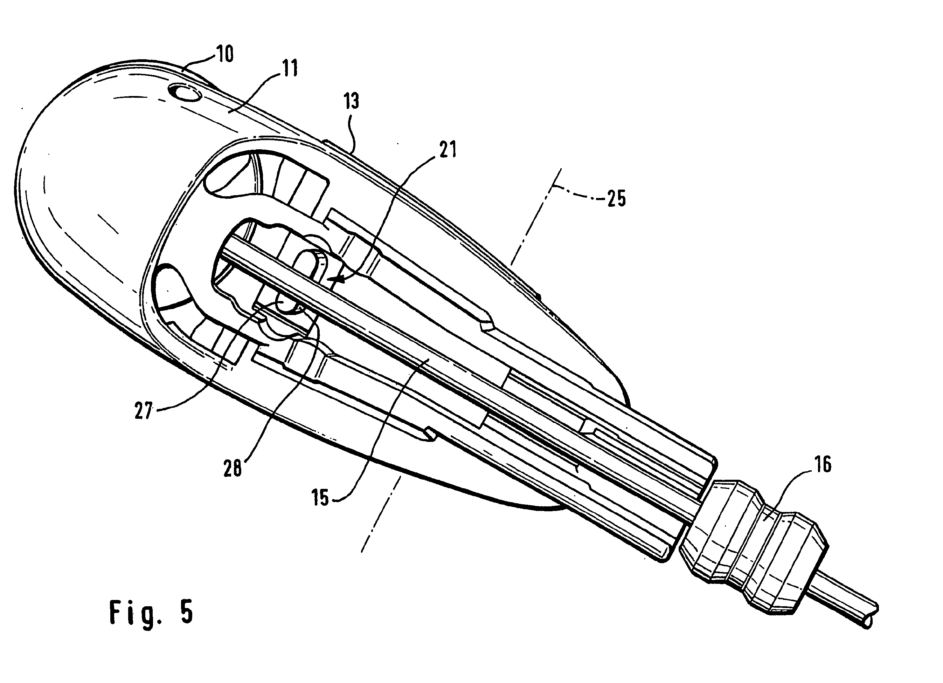

Um den Zusatzborstenträger 13 um die Schwenkachse 25 herum oszillierend anzutreiben, ist an seiner Unterseite als Antriebskupplung eine Eingriffs- bzw. Gleitfläche 27 vorgesehen, mit der er auf der Antriebswippe 15 sitzt, die auch den Hauptborstenträger 10 antreibt. Wie Figur 5 zeigt, wird die Eingriffs- bzw. Gleitfläche 27 von der stirnseitigen Oberfläche eines länglichen, sich quer zur Zahnbürstenlängsrichtung erstreckenden Stößels bzw. Höckers 28 gebildet, der zur Antriebswippe 15 hin vorspringt. Die Oberfläche des Stößels 28 kann im wesentlichen eben ausgebildet sein. Die umlaufende Antriebswippe fährt in Querrichtung über die Gleitfläche 27, wobei die vertikale Komponente der umlaufenden Wippbewegung auf den Stößel bzw. Höcker 28 übertragen wird und den Zusatzborstenträger 13 auf- und abwippt, wobei die Gleitfläche 27 mit der Antriebswippe 15 von den Zahnputz-Reaktionskräften, die auf das Zusatzborstenfeld wirken, in Eingriff gehalten werden. Gegebenenfalls kann hier auch eine Vorspannung des Zusatzborstenträgers beispielsweise mittels einer Feder vorgesehen sein, die den Zusatzborstenträger gegen die Antriebswippe drückt. Alternativ könnte auch vorgesehen sein, dass anstelle der Gleitfläche 27 eine nutförmige Querausnehmung in einem entsprechendem Abschnitt des Zusatzborstenträgers 13 vorgesehen ist, in der die Antriebswippe 15 sitzt, so dass der Zusatzborstenträger von der Antriebswippe nach oben gedrückt und aktiv nach unten gezogen werden würde. Eine solche Quernut entspricht der Anordnung zweier paralleler Gleitflächen 27, zwischen denen die Antriebswippe 15 geführt ist.

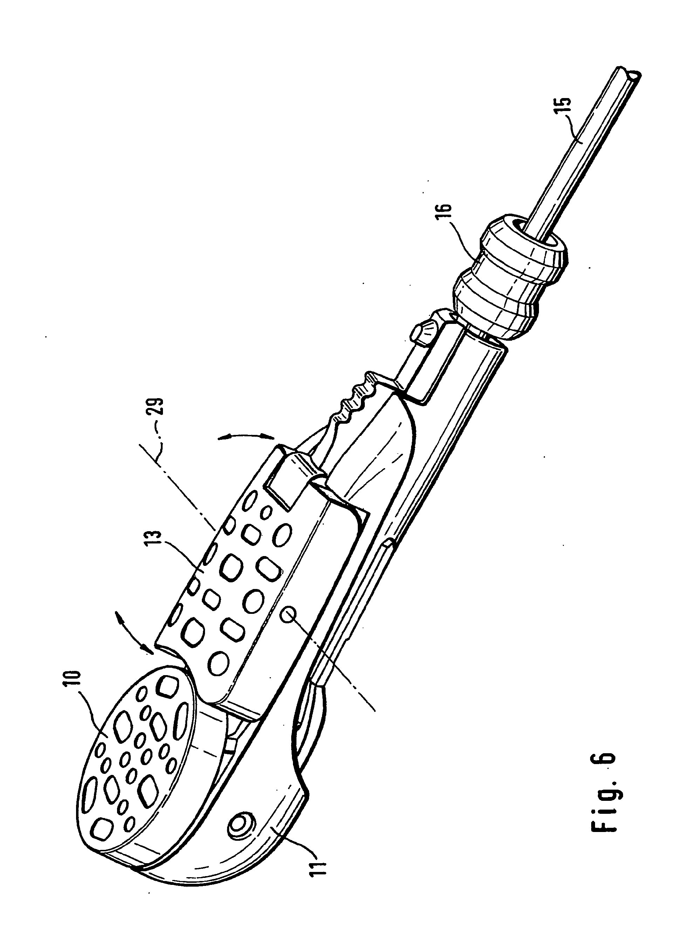

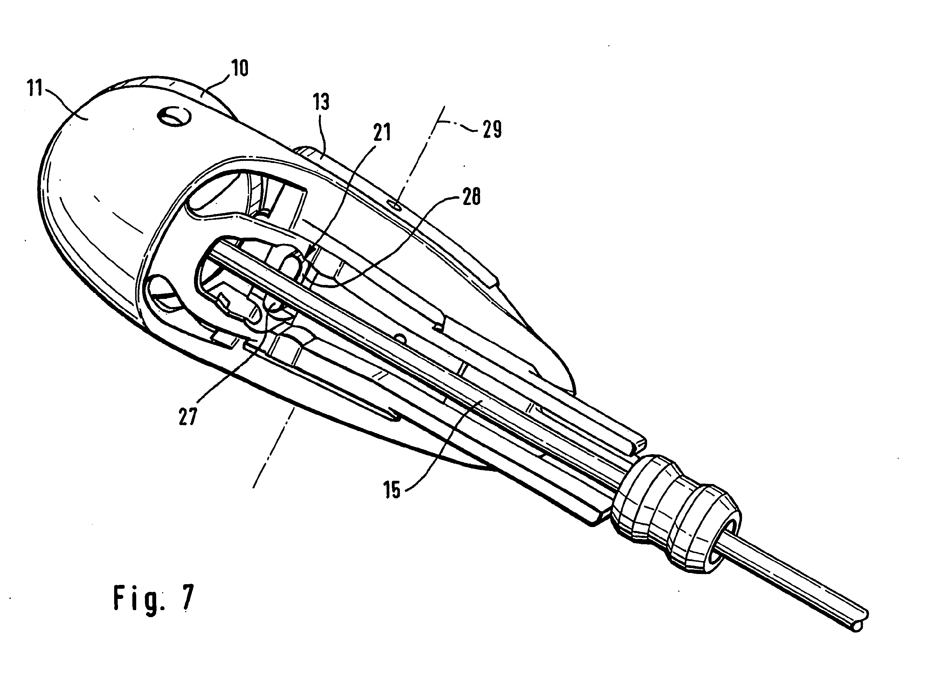

Gemäß den Figuren 6 und 7 kann der Zusatzborstenträger 13 auch etwa mittig um eine quer verlaufende Schwenkachse 29 nach Art einer Wippe gelagert sein. Die Schwenkachse 29 erstreckt sich wie in der zuvor beschriebenen Ausführung quer zur Zahnbürstenlängsrichtung bzw. zur Drehachse 12 des Borsenträgers 10 etwa in der von dem Zusatzborstenträger 13 definierten Ebene bzw. einer dazu parallelen Ebene, so dass ein dem Hauptborstenträger 10 zugewandter Abschnitt des Zusatzborstenträgers 13 und ein gegenüberliegender, dem Handteil 1 zugewandter Abschnitt des Zusatzborstenträgers 13 gegenläufig auf- und abgehende Wippbewegungen ausführen. Die Antriebskupplung des Zusatzborstenträgers kann identisch der zuvor beschriebenen Ausführung nach den Figuren 4 und 5 durch eine auf einem Stößel 28 vorgesehene Gleitfläche 27 gebildet sein, die auf der Antriebswippe 15 abgleitet. Insofern als bei dieser Ausführung die Zahnputz-Reaktionskräfte beidseitig der Schwenkachse 29 wirken, kann eine Vorspanneinrichtung zweckmäßig sein, die den Zusatzborstenträger mit der Antriebswippe 15 in Eingriff hält. Gegebenenfalls kann hier auch die zuvor beschriebene Zwangsführung mittels einer Quernut vorgesehen sein, in der die Antriebswippe sitzt.

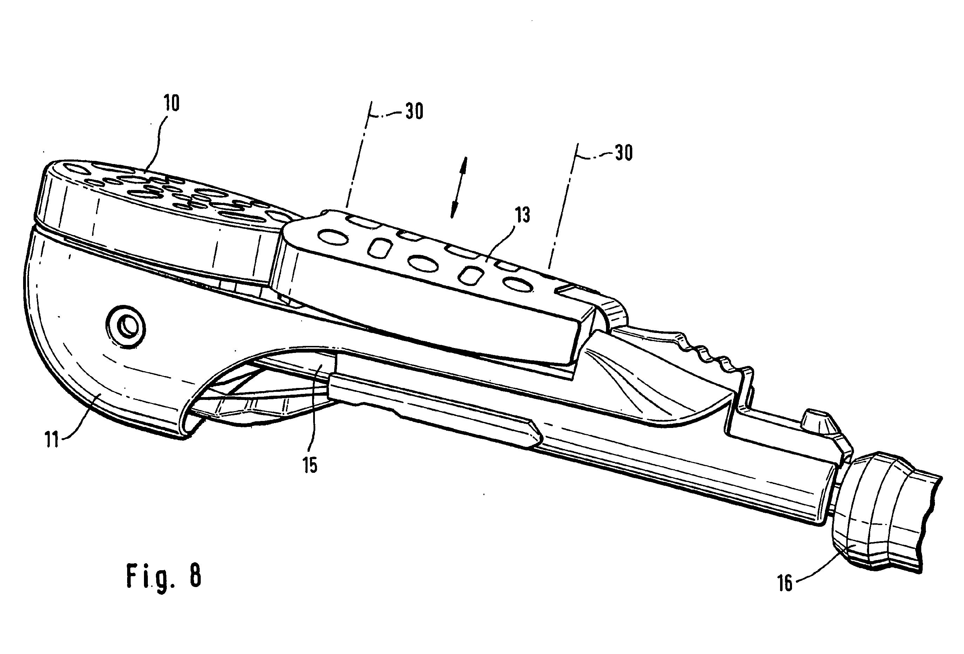

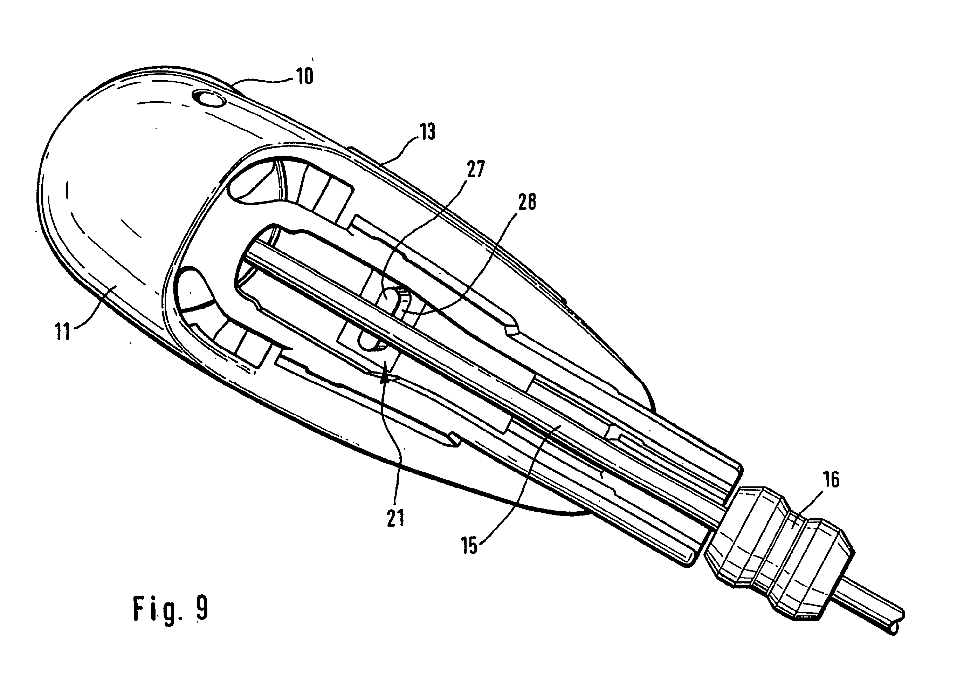

Gemäß Figur 8 und 9 kann der Zusatzborstenträger 13 auch translatorisch verschieblich an dem Bürstenkopfträger 11 geführt sein. Wie Figur 8 zeigt, kann der Zusatzborstenträger 13 entlang zweier Bewegungsachsen 30, die sich im wesentlichen senkrecht zur von dem Zusatzborstenträger definierten Ebene bzw. im wesentlichen parallel zur Drehachse 12 des Borstenträgers 10 erstrecken, geführt sein. Die Schiebführung kann beispielsweise durch eine an sich bekannte zylindrische Bolzenführung ausgebildet sein. Die Schiebeführungsachsen 30 können auf der Längsmittelebene der Zahnbürste in einem hinteren und vorderen Randabschnitt des Zusatzborstenträgers 13 angeordnet sein, wie dies Figur 8 zeigt. Entsprechend der translatorischen Beweglichkeit des Zusatzborstenträgers 13 kann dieser auf - und abgehende Hubbewegungen ausführen, so dass das Zusatzborstenfeld 8 auf dem Zusatzborstenträger 13 Stocherbewegungen ausführt.

Die Hubbewegung des Zusatzborstenträgers 13 wird auch hier durch eine Ankupplung an die Antriebswippe 15 erzeugt. Wie Figur 9 zeigt, kann auf einer Unterseite des Zusatzborstenträgers 13 eine sich quer zur Zahnbürstenlängsrichtung erstreckende Gleitfläche 27 vorgesehen sein, die von der Oberfläche eines zur Antriebswippe 15 vorspringenden Stößels 28 gebildet ist. Zweckmäßigerweise ist der Stößel 28 etwa mittig bzw. zentrisch unter dem Zusatzborstenfeld sowie mittig zwischen den Bewegungsachsen 30 angeordnet, so dass eine gleichmäßige Kraftverteilung und verkantungsfreie Bewegung erzeugt werden kann. Die Zahnputz-Reaktionskräfte, die auf das Zusatzborstenfeld 8 wirken, halten die Gleitfläche 27 mit der Antriebswippe 15 in Eingriff.

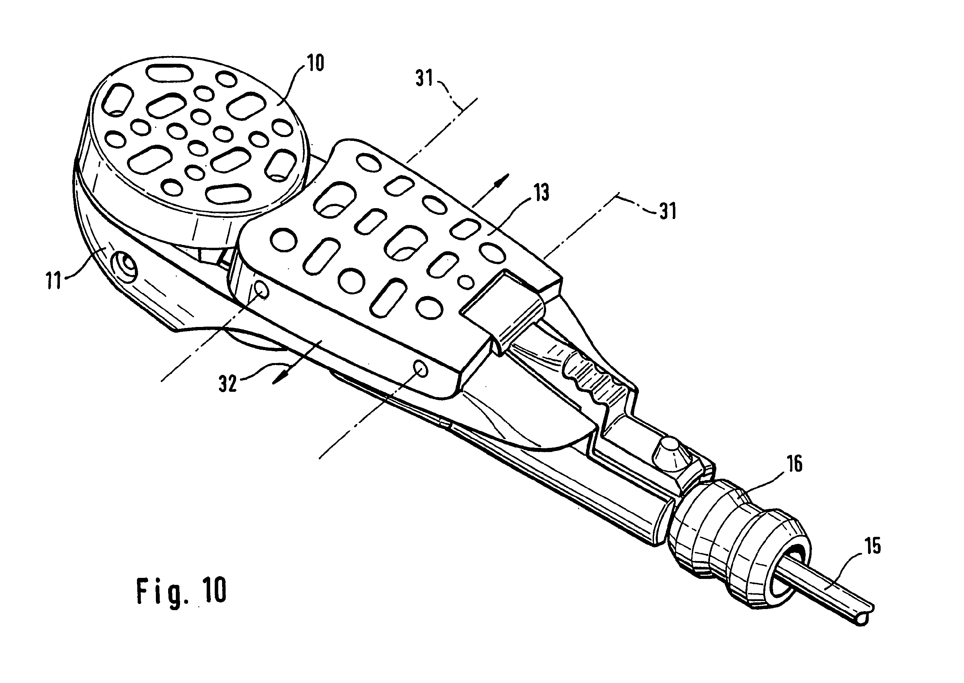

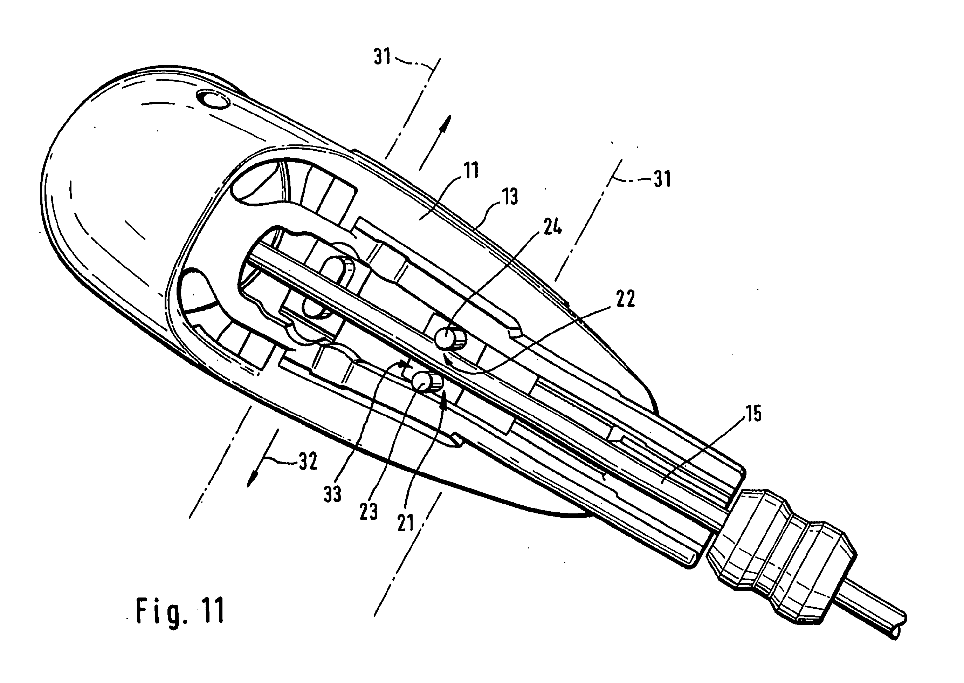

Eine weitere mögliche Lagerung des Zusatzborstenträgers 13 zeigen die Figuren 10 und 11. Der Zusatzborstenträger 13 ist auch hier translatorisch verschieblich an dem Bürstenkopfträger 11 gelagert, und zwar entlang zweier paralleler Schiebeführungsachsen 31, die sich in der von dem Zusatzborstenträger 13 definierten Ebene quer zur Zahnbürstenlängsrichtung bzw. zur Drehachse 12 des Borstenträgers 10 erstrecken. Wie Figur 10 zeigt, können ein hinterer, dem Handteil 1 zugewandter Endabschnitt und ein dem Hauptborstenträger 10 zugewandter Endabschnitt des Zusatzborstenträgers 13 durch die genannte Schiebeführung gelagert sein. Der Zusatzborstenträger 13 kann in diesem Fall seitlich quer hin- und hergehende Bewegungen ausführen, wie dies der Pfeil 32 verdeutlicht.

Die translatorisch oszillierende Antriebsbewegung des Zusatzborstenträgers 13 wird auch in diesem Fall von der Antriebswippe 15 bewirkt. Wie Figur 11 zeigt, sitzt der Zusatzborstenträger 13 mittels einer Querführung 33 auf der Antriebswippe 15. Die Querführung 33 wird ähnlich der Ausführung der Figuren 2 und 3 von zwei parallelen pfostenförmigen Vorsprüngen 23 und 24 definiert, die zwischen sich einen Spalt bzw. eine Längsausnehmung 22 definieren, die sich im wesentlichen senkrecht zur Ebene des Zusatzborstenträgers 13 erstreckt. Die Antriebswippe 15 kann zwischen den beiden Vorsprüngen 23 und 24 vertikal, d.h. in der Längssymmetrieebene der Zahnbürste freigängig auf- und abgleiten. In einer Ebene senkrecht hierzu, d.h. in einer Ebene parallel zu den beiden Schiebeführungsachsen 31 wird die Antriebsbewegung der Antriebswippe 15 jedoch übertragen, so dass der Zusatzborstenträger 13 in Richtung der Schiebeführungsachsen 31 oszillierend hin- und hergeht.

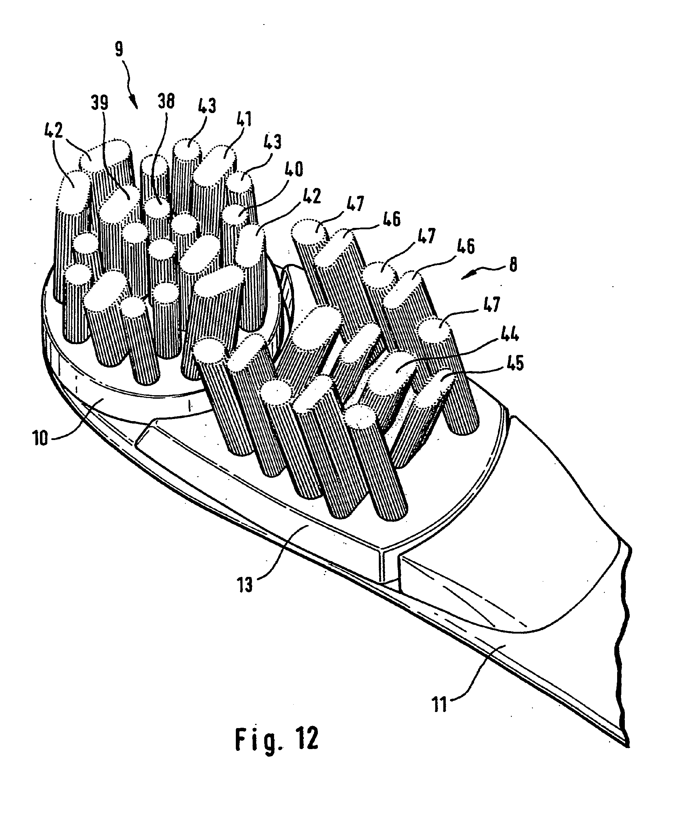

Eine bevorzugte Beborstung der beiden Borstenträger 10 und 13 zeigen die Figuren 12 bis 14. Es versteht sich, daß die Beborstung gemäß den Figuren 12 bis 14 bei jeder der vorstehend beschriebenen Ausführungsformen des Zusatzborstenträgers bzw. dessen Lagerung vorgesehen sein kann.

Das rotatorisch oszillierend antreibbare Hauptborstenfeld 9 besitzt einen insgesamt etwa kreiszylindrischen Umriss und wird von einer Mehrzahl von Borstenbüscheln verschiedener Neigung, verschiedener Höhe und verschiedenen Querschnitts gebildet.

Wie Figur 12 und Figur 13 zeigt, sind zentrale erste Borstenbüschel 38 mittig um die Drehachse des Hauptborstenträgers herum angeordnet. Sie erstrecken sich senkrecht zu der von dem Borstenträger 10 definierten Ebene und besitzen einen etwa kreisrunden bzw. leicht ovalen Querschnitt. Von den ersten Borstenbüscheln 38 sind vier an der Zahl vorgesehen. Sie liegen mittig um die Drehachse 19 herum. Benachbart zu dem ersten Borstenbüschel 38 sind zweite Borstenbüschel 39, die bei unverdrehter Anordnung des Borstenträgers 10 auf der Längsmittelachse der Zahnbürste liegen und in Längsrichtung vor bzw. hinter dem ersten Borstenbüschel 38 liegen. Wie Figur 12 zeigt, besitzen die zweiten Borstenbüschel 39 einen ovalen Querschnitt mit einer sich quer zur Längsachse der Zahnbürste erstreckenden Längsachse. Die zweiten Borstenbüschel 39 sind ebenfalls senkrecht zu der von dem Borstenträger 10 definierten Ebene angeordnet. Ihr Abstand von der Drehachse 19 ist größer als der der ersten Borstenbüschel 38. Das Verhältnis von Konturlänge zu Konturbreite beträgt etwa zwei.

Die weiteren Borstenbüschel des angetriebenen Borstenfeldes sind geneigt angeordnet, und zwar in unterschiedlicher Ausrichtung. Die vierten Borstenbüschel 40, die radial ausserhalb der ersten Borstenbüschel 38 sozusagen auf einem zweiten Borstenbüschelring angeordnet sind, besitzen einen etwa kreisförmigen Querschnitt und sind radial nach außen geneigt, d.h. ihre freien Arbeitsenden sind von der Drehachse des Borstenträgers weiter entfernt als ihre am Borstenträger 10 befestigten Befestigungsabschnitte. Der Neigungswinkel ist spitz und beträgt weniger als 20°.

Die dritten Borstenbüschel 41 sind ebenfalls radial nach außen geneigt angeordnet. Sie haben jedoch eine ovale Kontur bzw. einen länglichen Querschnitt, wobei die Längsachse des Querschnitts radial ausgerichtet ist. Der Querschnitt der dritten Borstenbüschel ist etwa zweimal bis dreimal so lang wie breit. Die dritten Borstenbüschel 41 sitzen radial außerhalb der ersten Borstenbüschel 38 benachbart zu diesen auf einer quer zur Zahnbürstenlängsrichtung verlaufenden Symmetrieachse des Borstenfeldes.

Die übrigen Borstenbüschel des Borstenfeldes 9 sind ebenfalls geneigt angeordnet, jedoch sind sie in Umfangsrichtung um die Drehachse 12 herum geneigt. Sie bilden den äußeren Rand bzw. Kranz des Borstenfeldes 9.

Die fünften Borstenbüschel 42 besitzen eine ovale Kontur bzw. einen länglichen Querschnitt, der etwa tangential zum Rand des Borstenträgers 10 ausgerichtet ist. Im Querschnitt sind die Borstenbüschel 42 etwa doppelt bis dreimal so lang wie breit. Wie Figur 12 zeigt, sind die fünften Borstenbüschel 42 paarweise im Bereich der Längsachse der Zahnbürste angeordnet, wenn das Borstenfeld 9 unverdreht ist. Sie sind paarweise gegeneinander geneigt, so dass ihre freien Arbeitsenden näher zusammen stehen als ihre im Borstenträger 10 verankerten Befestigungsabschnitte.

Schließlich sind sechste Borstenbüschel 43 vorgesehen, die ebenfalls am äußeren Rand des Borstenfeldes liegen und in Umfangsrichtung um die Drehachse 12 geneigt sind. Sie besitzen jedoch einen etwa kreisförmigen Querschnitt und sind paarweise auf beiden Seiten der dritten Borstenbüschel 41 angeordnet und ebenfalls gegensinnig auf diese zugeneigt. Die Neigungswinkel der in Umfangsrichtung geneigten, außen liegenden Borstenbüschel 43 und 42 sind ebenfalls spitz und betragen vorzugsweise weniger als 20° zur Senkrechten durch die vom Borstenträger 10 definierten Ebene.

Wie Figuren 13 und 14 zeigen, besitzen die auf dem bewegbaren Borstenträger 10 angeordneten Borstenbüschel zwei Längen. Die in Längsrichtung ganz vorne und hinten liegenden, außen angeordneten fünften Borstenbüschel 42, deren freie Enden alle in einer Ebene liegen, sind länger als die restlichen Borstenbüschel. Die freien Enden der fünften Borstenbüschel 42 definieren eine Ebene. Der Höhenunterschied zwischen den Borstenbüscheln beträgt im Bereich von 0,5 mm bis 2,5 mm, vorzugsweise etwa 1,0 mm bis 1,5 mm. In der gezeichneten Ausführung beträgt er 1,2 mm.

Die Borstenbüschel des Zusatzborstenfeldes 8 besitzen ebenfalls unterschiedliche Querschnitte hinsichtlich Kontur und Fläche und sind darüber hinaus ebenfalls unterschiedlich geneigt angeordnet. Es sind auch Borstenbüschel unterschiedlicher Länge vorgesehen, wie noch beschrieben wird.

Wie Figur 12 zeigt, sind im Zusatzborstenfeld grob gesprochen drei Reihen von Borstenbüschein vorgesehen, die sich alle etwa in Längsrichtung der Zahnbürste erstrecken. Die mittlere Reihe liegt auf der Längsmittelachse des Zusatzborstenträgers 13, während die beiden äußeren Reihen quer hierzu beabstandet sind.

In der mittleren Borstenreihe sind alle Borstenbüschel zum Handteil 1 hin geneigt angeordnet. Alle Borstenbüschel besitzen einen länglichen bzw. ovalen Querschnitt, jedoch unterschiedliche Querschnittsflächen. Erste Borstenbüschel 44 des festen Borstenfeldes 8 besitzen einen ovalen Querschnitt, dessen Längsachse ca. doppelt so lang ist wie seine Querachse. Die ersten Borstenbüschel 44 alternieren in der mittleren Reihe mit nachfolgend als vierten Borstenbüscheln bezeichneten Borstenbüscheln 45, die ebenfalls zum Handteil hin nach hinten geneigt sind. Die vierten Borstenbüschel 45 besitzen ebenfalls einen ovalen Querschnitt, sind jedoch wesentlich schlanker ausgebildet und besitzen eine kleinere Querschnittsfläche als die ersten Borstenbüschel. Entsprechend der gezeichneten Ausführung ist der länglich Querschnitt etwa - grob gesprochen - dreimal so lang wie breit. Die Länge des ovalen Querschnitts ist dabei geringfügig kleiner als die Länge des Querschnitts der ersten Borstenbüschel 44.

Die beiden äußeren Reihen der Borstenbüschel des festen Borstenfeldes 8 bestehen aus zweiten und dritten Borstenbüscheln. Zweite Borstenbüschel 46 besitzen einen ovalen Querschnitt mit relativ schlanker Kontur. Die Längsachse der länglichen Querschnittskontur beträgt etwa das dreifache der Breite der Querschnittskontur. Die dritten Borstenbüschel 47 besitzen einen etwa kreisrunden Querschnitt, wobei der Durchmesser des Querschnitts etwas mehr als die Hälfte der Längsachse des Querschnitts der zweiten Borstenbüschel 46 beträgt. Wie Figur 12 zeigt, sind die dritten Borstenbüschel 47 von der Längsmittelachse des Bürstenkopfs 2 unterschiedlich beabstandet. Der Abstand zur Längsmittelachse nimmt zum Handteil 1 hin ab. Die dritten Borstenbüschel 47 sind jedoch noch soweit in Reihe hintereinander, dass ihre Kontur etwa hinter der Kontur der viel breiteren zweiten Borstenbüschel 46 liegt. Die zweiten und dritten Borstenbüschel 46 und 47 sind jeweils in einem spitzen Winkel nach vorne, d.h. zum antreibbaren Borstenfeld 9 hin geneigt, und zwar in einem spitzen Winkel, der vorzugsweise 12° bis 15° betragen kann. Sämtliche Borstenbüschel des Zusatzborstenfeldes 8 sind vorzugsweise in der Längsmittelebene des Bürstenkopfs 2 bzw. dazu parallelen Ebenen geneigt. Demgegenüber sind sämtliche Borstenbüschel des Hauptborstenfeldes 9 unterschiedlich geneigt bzw. in einer anderen Ausrichtung angeordnet.

Die Borstenbüschel des Zusatzborstenfeldes 8 definieren zwei Arbeitsebenen, wie Figur 14 zeigt. Die kreisrunden dritten Borstenbüschel 47 in den äußeren Reihen sowie die dickeren ersten Borstenbüschel 44 in der mittleren Reihe sind kürzer ausgebildet und definieren mit ihren freien Arbeitsenden eine tiefere Ebene, die mit der Ebene übereinstimmt, die von den ersten, zweiten, dritten und vierten sowie sechsten Borstenbüscheln des Hauptborstenfeldes 9 definiert wird. Eine höhere, zweite Ebene wird hingegen von den längeren vierten Borstenbüscheln 45 in der mittleren Reihe und den zweiten Borstenbüscheln 46 in den beiden äußeren Reihen definiert. Diese höhere Ebene stimmt mit der Ebene überein, die von den längeren fünften Borstenbüscheln des Hauptborstenfeldes 9 definiert wird. Im Zusatzborstenfeld 8 gilt damit, dass die schlankeren ovalen Borstenbüschel eine größere Länge besitzen als die dickeren Borstenbüschel.

Im Gegensatz zum Hauptborstenfeld 9 besitzt das Zusatzborstenfeld 8 keine kreisrunde Kontur, sondern eine insgesamt langgestreckte Kontur, die an ihrem dem rotierenden Borstenfeld 9 zugewandten Ende dieses umgibt.

Wie Figur 1 zeigt, ist der Bürstenkopf 2 an dem Bürstenrohr 3 lösbar befestigt. Er kann in einfacher Weise in axialer Richtung vom Bürstenrohr 3 abgezogen bzw. auf dieses aufgeschoben werden. Der Bürstenkopfträger 11 besitzt hierzu einen Befestigungsabschnitt 34, mit dem er auf einen bzw. in einen entsprechenden Befestigungsabschnitt 35 am stirnseitigen Ende des Bürstenrohrs 3 geschoben werden kann. Die beiden Befestigungsabschnitte 19 und 20 sind beide jeweils etwa halbschalenförmig ausgebildet und ergänzen sich passgenau, so dass sie im zusammengeschobenen Zustand ein Hohlprofil bilden, das das Bürstenrohr 3 fortsetzt.

Um den Bürstenkopf 2 in axialer Richtung am Handteil 1 bzw. dem Bürstenrohr 3 zu sichern, ist zwischen dem Bürstenkopfträger und dem Handteil 1 eine Verrastvorrichtung 36 vorgesehen, die beim Aufschieben des Bürstenkopfs 2 in axialer Richtung automatisch verrastet und andererseits durch radialen Druck auf das Bürstenrohr 3 bzw. den Bürstenkopfträger wieder gelöst werden kann. Beim Aufschieben des Bürstenkopfs 2 wird gleichzeitig automatisch die Antriebswippe 15 mit den beiden beweglichen Borstenträgern 10 und 13 gekuppelt.

## Patentansprüche

1. Elektrische Zahnbürste mit einem Zahnbürstenkopf und einem Handteil (1) mit einem elektrischen Antrieb (5, 15), wobei der Zahnbürstenkopf einen Bürstenkopfträger (11), der mit dem Handteil (1) verbunden ist, sowie mehrere Borstenträgern (10, 13), die jeweils ein Borstenfeld (8, 9) tragen und beweglich an dem Bürstenkopfträger (11) gelagert sind und von dem Antrieb (5, 15) oszillierend antreibbar sind, aufweist, wobei die Borstenträger (10, 13) mittels einer Antriebskupplung (21) an eine im wesentlichen quer zur Zahnbürstenlängsrichtung wippbare Antriebswippe (15) des Antriebs gekuppelt sind, jeweils Antriebskupplungsmittel (18, 22, 27) besitzen, mit denen sie an die Antriebswippe gekuppelt sind, und wobei die mehreren Borstenträger einen Hauptborstenträger (10) der an dem non dem Handteil der Zahnhüste entfernten Ende des Bürstenkopfträgers angeordnet ist und einen in unmittelbarer Nachbarschaft hinter dem Hauptborstenträger angeordneten Zusatzborstenträger (13) umfassen und die Antriebskupplungen (21) der Borstenträger (10, 13) derart ausgebildet sind, dass ausschließlich Kräfte und Bewegungen quer zur Zahnbürstenlängsrichtung übertragen werden, wobei vorzugsweise die Antriebskupplungen (21) in einer die Längsrichtung enthaltenden Ebene freigängig und in einer hierzu senkrechten Ebene kraftübertragend ausgebildet sind.

2. Elektrische Zahnbürste nach dem vorhergehenden Anspruch, wobei die Antriebskupplungsmittel (18, 22, 27) der Borstenträger (10, 13) derart ausgebildet sind, dass sie an eine mehrachsig wippbare, insbesondere eine doppelkegelförmige Umlaufbahn oder sonstige Bewegungsbahn beschreibende Antriebswippe (15) ankuppelbar sind.

3. Elektrische Zahnbürste nach einem der vorhergehenden Ansprüche, wobei die Borstenträger (10, 13) jeweils eine Bewegungsachse (12, 19, 25, 29, 30, 31) quer zur Zahnbürstenlängsrichtung besitzen.

4. Elektrische Zahnbürste nach einem der vorhergehenden Ansprüche, wobei ein Hauptborstenträger (10) insbesondere an dem vom Handteil (1) entfernten Ende des Bürstenkopfträgers (11) um eine im wesentlichen senkrecht zur Zahnbürstenlängsrichtung und/oder im wesentlichen parallel zu einer Hauptborstenrichtung des auf dem Hauptborstenträger angeordneten Borstenfelds (9) angeordnete Drehachse (12) drehbar gelagert und oszillierend antreibbar ist.

5. Elektrische Zahnbürste nach einem der vorhergehenden Ansprüche, wobei ein Zusatzborstenträger (13), insbesondere ein am nächsten zum Handteil (1) angeordneter Borstenträger, um eine im wesentlichen senkrecht zur Zahnbürstenlängsrichtung angeordnete Schwenkachse (19, 25, 29) schwenkbar gelagert und oszillierend antreibbar ist.

6. Elektrische Zahnbürste nach dem vorhergehenden Anspruch, wobei die Schwenkachse (19) des Zusatzborstenträgers (13) etwa parallel zur Hauptborstenrichtung des auf dem Zusatzborstenträgers (13) angeordneten Zusatzborstenfeldes (8) und/oder etwa senkrecht zur von dem Zusatzborstenträger (13) definierten Ebene angeordnet ist.

7. Elektrische Zahnbürste nach Anspruch 5, wobei die Schwenkachse (25, 29) des Zusatzborstenträgers (13) etwa parallel zu einer von dem Zusatzborstenträger (13) definierten Ebene angeordnet ist.

8. Elektrische Zahnbürste nach einem der vorhergehenden Ansprüche, wobei ein Zusatzborstenträger (13), insbesondere ein am nächsten zum Handteil angeordneter Borstenträger, entlang einer Bewegungsachse (30, 31) translatorisch verschieblich gelagert ist.

9. Elektrische Zahnbürste nach dem vorhergehenden Ansprüche, wobei die Bewegungsachse (30) etwa parallel zur Hauptborstenrichtung des auf dem Zusatzborstenträger (13) angeordneten Zusatzborstenfeldes (8) und/oder etwa senkrecht zur von dem Zusatzborstenträger definierten Ebene angeordnet ist.

10. Elektrische Zahnbürste nach Anspruch 8, wobei die Bewegungsachse (31) quer zur Zahnbürstenlängsrichtung und etwa parallel zur von dem Zusatzborstenträger definierten Ebene angeordnet ist.

11. Elektrische Zahnbürste nach einem der vorhergehenden Ansprüche, wobei der Zusatzborstenträger (13) als Antriebskupplung (21) eine Gelenkverbindung aufweist, die um eine Gelenkachse quer zur Zahnbürstenlängsrichtung gelenkig ausgebildet ist.

12. Elektrische Zahnbürste nach dem vorhergehenden Anspruch, wobei die Gelenkverbindung zwischen dem Zusatzborstenträger (13) und der Antriebswippe (15) neben ihrer Gelenkigkeit um die genannte Gelenkachse einen weiteren Freiheitsgrad aufweist, insbesondere eine translatorische Beweglichkeit in Richtung der Gelenkachse zulässt, wobei vorzugsweise die Antriebswippe in einer längsschlitzförmigen Ausnehmung (22) im Zusatzborstenträger (13) geführt ist.

13. Elektrische Zahnbürste nach einem der vorhergehenden Ansprüche, wobei der Zusatzborstenträger (13) als Antriebskupplung (21) eine Gleitfläche (27) aufweist, die sich quer zur Längsrichtung der Zahnbürste erstreckt und auf der die Antriebswippe (15) abgleiten kann, wobei vorzugsweise eine Vorspanneinrichtung vorgesehen ist, die die Gleitfläche (27) mit der Antriebswippe (15) in Eingriff hält.

14. Elektrische Zahnbürste nach einem der vorhergehenden Ansprüche, wobei die Antriebskupplungen (21) unmittelbar an den Borstenträgern (10, 13) vorgesehen sind und der Zahnbürstenkopf frei von eigenen Antriebswellen, -wippen, -stäben und dergleichen ausgebildet ist.

15. Elektrische Zahnbürste nach einem der vorhergehenden Ansprüche, wobei er lösbare Befestigungsmittel (34, 36) zur Befestigung am Handteil (1) aufweist und der Bürstenkopfträger (11) zusammen mit den Borstenträgern (10, 13) vom Handteil (1) abnehmbar bzw. darauf aufsetzbar ist, wobei vorzugsweise die Antriebskupplungen (21) Ausnehmungen (22) und/oder Eingriffsflächen (27) aufweisen, die beim Aufstecken des Zahnbürstenkopfs auf den Handteil (1) auf ein handteilseitiges Antriebselement (15) auffädeln bzw. damit in Eingriff gelangen.

16. Elektrische Zahnbürste nach einem der vorhergehenden Ansprüche, wobei an zumindest einem der Borstenträger (10, 13) unterschiedlich geneigte, im Querschnitt unterschiedliche, unterschiedlich lange und/oder unterschiedlich steife Borsten aufweisende Borstenbüschel vorgesehen sind, wobei vorzugsweise jeder Borstenträger (10,13) unterschiedlich geneigte Borstenbüschel aufweist und unterschiedlich geneigte Borstenbüschel unterschiedliche Querschnitte besitzen.

## Claims

1. An electric toothbrush with a toothbrush head and a handle part (1) with an electric actuator (5, 15), wherein the toothbrush head has a brush head carrier (11) that is connected with the handle part (1), as well as multiple bristle carriers (10, 13) that respectively carry a bristle field (8, 9) and are supported so as to be movable on the brush head carrier (11), and may be driven in an oscillating manner by the actuator (5, 15); wherein the bristle carriers (10, 13) are coupled by means of a drive coupling (21) to a drive rocker (15) of the actuator, which drive rocker (15) is capable of rocking essentially transversal to the longitudinal direction of the toothbrush , respectively having a drive coupling means (18, 22, 27) with which they are coupled to the drive rocker; and wherein the multiple bristle carriers comprise a primary bristle carrier (10) that is arranged at the end of the brush head carrier that is remote from the handle part of the toothbrush, and an auxiliary bristle carrier (13) arranged in immediate proximity after the primary bristle carrier; and the drive couplings (21) of the bristle carriers (10, 13) are designed such that exclusively forces and movements transversal to the longitudinal direction of the toothbrush are transmitted, wherein the drive couplings (21) are preferably free in a plane including the longitudinal direction and are designed to transmit forces in a plane perpendicular to this.

2. The electric toothbrush according to the preceding claim, wherein the drive coupling means (18, 22, 27) of the bristle carriers (10, 13) are designed such that they may be coupled to a drive rocker (15) that may be rocked on multiple axes, in particular describing a double cone-shaped path or other movement path.

3. The electric toothbrush according to any one of the preceding claims, wherein the bristle carriers (10, 13) respectively have a movement axis (12, 19, 25, 29, 30, 31) transversal to the longitudinal direction of the toothbrush.

4. The electric toothbrush according to any one of the preceding claims, wherein a primary bristle carrier (10) is in particular supported on the end of the brush head carrier (11) that is remote from the handle part (1) such that it is capable of rotating on a rotation axle (12) that is essentially perpendicular to the longitudinal direction of the toothbrush and/or essentially parallel to a primary bristle direction of the bristle field (9) arranged on the primary bristle carrier, and may be driven in an oscillating manner.

5. The electric toothbrush according to any one of the preceding claims, wherein an auxiliary bristle carrier (13) - in particular a bristle carrier arranged nearest the handle part (1) - is pivotably supported on a pivot axis (19, 25, 29) arranged essentially perpendicular to the longitudinal direction of the toothbrush, and may be driven in an oscillating manner.

6. The electric toothbrush according to the preceding claim, wherein the pivot axis (19) of the auxiliary bristle carrier (13) is arranged approximately parallel to the primary bristle direction of the auxiliary bristle field (8) arranged on the auxiliary bristle carrier (13) and/or approximately perpendicular to the plane defined by the auxiliary bristle carrier (13).

7. The electric toothbrush according to claim 5, wherein the pivot axis (25, 29) of the auxiliary bristle carrier (13) is arranged approximately parallel to a plane defined by the auxiliary bristle carrier (13).

8. The electric toothbrush according to any one of the preceding claims, wherein an auxiliary bristle carrier (13) - in particular a bristle carrier arranged nearest the handle part - is supported so as to be able to be shifted in a translatory manner along a movement axis (30, 31).

9. The electric toothbrush according to the preceding claim, wherein the movement axis (30) is arranged approximately parallel to the primary bristle direction of the auxiliary bristle field (8) arranged on the auxiliary bristle carrier (13) and/or approximately perpendicular to the plane defined by the auxiliary bristle carrier.

10. The electric toothbrush according to claim 8, wherein the movement axis (31) is arranged transversal to the longitudinal direction of the toothbrush and approximately parallel to the plane defined by the auxiliary bristle carrier.

11. The electric toothbrush according to any one of the preceding claims, wherein the auxiliary bristle carrier (13) has as a drive coupling (21) an articulated connection that is designed so as to be articulated around an articulation axis transversal to the longitudinal direction of the toothbrush.

12. The electric toothbrush according to the preceding claim, wherein the articulated connection between the auxiliary bristle carrier (13) and the drive rocker (15) has an additional degree of freedom (in addition to its articulation around the cited articulation axis), which permits in particular a translatory movement in the direction of the articulated axis, wherein the drive rocker is preferably guided in a longitudinal slot-shaped recess (22) on the auxiliary bristle carrier (13).

13. The electric toothbrush according to any one of the preceding claims, wherein the auxiliary bristle carrier (13) has as a drive coupling (21) a slide surface (27) that extends transversal to the longitudinal direction of the toothbrush and onto which the drive rocker (15) may slide, wherein a pretensioning device is preferably provided that keeps the slide surface (27) engaged with the drive rocker (15).

14. The electric toothbrush according to any one of the preceding claims, wherein the drive couplings (21) are provided in immediate proximity to the bristle carriers (10, 13), and the toothbrush head is designed without its own drive shafts, drive rockers, drive rods, and the like.

15. The electric toothbrush according to any one of the preceding claims, wherein it has detachable fastening means (34, 36) for attachment to the handle part (1), and the brush head carrier (11) together with the bristle carriers (10, 13) are removable from or, respectively, placable on the handle part (1), wherein the drive couplings (21) preferably have recesses (22) and/or engagement surfaces (27) that, upon placement of the toothbrush head onto the handle part (1), thread onto or, respectively, engage with a drive element (15) at the handle.

16. The electric toothbrush according to any one of the preceding claims, wherein bristle tufts having bristles of different inclination, that are different in cross section, that are of different length and/or are of different rigidity are provided on at least one of the bristle carriers (10, 13), wherein each bristle carrier (10, 13) preferably has bristle tufts at different angles, and differently angled bristle tufts have different cross sections.

## Revendications

1. Brosse à dents électrique comprenant une tête de brosse à dents et une pièce à main (1) pourvue d'un entraînement électrique (5, 15), dans laquelle la tête de brosse à dents présente un support de tête de brosse (11), qui est relié à la pièce à main (1), ainsi que plusieurs supports de poils (10, 13), qui supportent chacun un champ de poils (8, 9) et sont montés mobiles sur le support de tête de brosse (11) et peuvent être entraînés de façon oscillante par l'entraînement (5, 15), les supports de poils (10, 13) étant accouplés à une bascule d'entraînement (15) de l'entraînement, basculable sensiblement transversalement au sens longitudinal de la brosse à dents, à l'aide d'un accouplement d'entraînement (21), possédant chacun des moyens d'accouplement d'entraînement (18, 22, 27), avec lesquels ils sont accouplés à la bascule d'entraînement, et les plusieurs supports de poils comprenant un support de poils principal (10), qui est disposé à l'extrêmité du support de tête de brosse distante de la pièce à main de la brosse à dents, et un support de poils de complément (13) disposé à proximité immédiate derrière le support de poils principal, et les accouplements d'entraînement (21) des supports de poils (10, 13) étant conçus de telle façon que seuls des forces et des mouvements sont transmis transversalement au sens longitudinal de la brosse à dents, les accouplements d'entraînement (21) étant de préférence conçus de manière à pouvoir bouger librement dans un plan incluant le sens longitudinal et de façon à transmettre une force dans un plan qui en est perpendiculaire.

2. Brosse à dents électrique selon la revendication précédente, dans laquelle les moyens d'accouplement d'entraînement (18, 22, 27) des supports de poils (10, 13) sont conçus de telle sorte qu'ils peuvent être accouplés à une bascule d'entraînement (15) pouvant être basculée sur plusieurs axes, décrivant en particulier une trajectoire circonférentielle en forme de double cône ou une autre trajectoire de mouvement.

3. Brosse à dents électrique selon l'une des revendications précédentes, dans laquelle les supports de poils (10, 13) possèdent chacun un axe de mouvement (12, 19, 25, 29, 30, 31) transversal au sens longitudinal de la brosse à dents.

4. Brosse à dents électrique selon l'une des revendications précédentes, dans laquelle un support de poils principal (10), en particulier à l'extrêmité du support de tête de brosse (11) distante de la pièce à main (1), est monté rotatif autour d'un axe de rotation (12) sensiblement perpendiculaire au sens longitudinal de la brosse à dents et/ou sensiblement parallèle à un sens de poils principal du champ de poils (9) disposé sur le support de poils principal, et peut être entraîné de façon oscillante.

5. Brosse à dents électrique selon l'une des revendications précédentes, dans laquelle un support de poils de complément (13), en particulier un support de poils disposé au plus près de la pièce à main (1), est monté pivotant autour d'un axe de pivotement (19, 25, 29) sensiblement perpendiculaire au sens longitudinal de la brosse à dents et peut être entraîné de façon oscillante.

6. Brosse à dents électrique selon la revendication précédente, dans laquelle l'axe de pivotement (19) du support de poils de complément (13) est disposé sensiblement parallèlement au sens de poils principal du champ de poils de complément (8) disposé sur le support de poils de complément (13) et/ou sensiblement perpendiculairement au plan défini par le support de poils de complément (13).

7. Brosse à dents électrique selon la revendication 5, dans laquelle l'axe de pivotement (25, 29) du support de poils de complément (13) est disposé sensiblement parallèlement à un plan défini par le support de poils de complément (13).

8. Brosse à dents électrique selon l'une des revendications précédentes, dans laquelle un support de poils de complément (13), en particulier un support de poils disposé au plus près de la pièce à main, est monté mobile en translation le long d'un axe de déplacement (30, 31).

9. Brosse à dents électrique selon la revendication précédente, dans laquelle l'axe de déplacement (30) est disposé sensiblement parallèlement au sens de poils principal du champ de poils de complément (8) disposé sur le support de poils de complément (13) et/ou sensiblement perpendiculairement au plan défini par le support de poils de complément.

10. Brosse à dents électrique selon la revendication 8, dans laquelle l'axe de déplacement (31) est disposé transversalement au sens longitudinal de la brosse à dents et sensiblement parallèlement au plan défini par le support de poils de complément.

11. Brosse à dents électrique selon l'une des revendications précédentes, dans laquelle le support de poils de complément (13) présente, comme accouplement d'entraînement (21), une liaison articulée qui est réalisée en articulation autour d'un axe d'articulation transversal au sens longitudinal de la brosse à dents.

12. Brosse à dents électrique selon la revendication précédente, dans laquelle la liaison articulée entre le support de poils de complément (13) et la bascule d'entraînement (15) présente, en plus de sa flexibilité autour dudit axe d'articulation, un autre degré de liberté, en particulier permet une mobilité en translation en direction de l'axe d'articulation, la bascule d'entraînement étant de préférence guidée dans un évidement (22) en forme de fente oblongue dans le support de poils de complément (13).

13. Brosse à dents électrique selon l'une des revendications précédentes, dans laquelle le support de poils de complément (13) présente, comme accouplement d'entraînement (21), une surface de glissement (27) qui s'étend transversalement au sens longitudinal de la brosse à dents et sur laquelle la bascule d'entraînement (15) peut glisser, un dispositif de précontrainte étant de préférence prévu, qui maintient en prise la surface de glissement (27) avec la bascule d'entraînement (15).

14. Brosse à dents électrique selon l'une des revendications précédentes, dans laquelle les accouplements d'entraînement (21) sont prévus directement sur les supports de poils (10, 13) et la tête de brosse à dents est réalisée sans présenter d'arbres, de bascules, de tiges d'entraînement ou similaires qui lui sont propres.

15. Brosse à dents électrique selon l'une des revendications précédentes, dans laquelle la brosse présente des moyens de fixation amovibles (34, 36) permettant la fixation à la pièce à main (1) et le support de tête de brosse (11) peut être démonté de la pièce à main (1) ou monté dessus conjointement avec les supports de poils (10, 13), les accouplements d'entraînement (21) présentant de préférence des évidements (22) et/ou des surfaces d'engagement (27) qui, lors de l'emboîtement de la tête de brosse à dents sur la pièce à main (1), s'engagent sur un élément d'entraînement (15) côté pièce à main et viennent ainsi en prise.

16. Brosse à dents électrique selon l'une des revendications précédentes, dans laquelle au moins un des supports de poils (10, 13) comprend des touffes de poils présentant des poils inclinés différemment, de sections différentes, de longueurs différentes et/ou de rigidités différentes, chaque support de poils (10, 13) présentant de préférence des touffes de poils inclinées différemment et les touffes de poils inclinées différemment possédant des sections différentes.
